# EUROPEAN PATENT APPLICATION

(11) **EP 0 900 522 A1**
(43) Date of publication of application: **10.03.1999**
(21) Application number: 98202950.6
(22) Date of filing: 03.09.1998
(51) Int. Cl.: A01J 5/017

(54) **Milking installation**

(30) Priority: 04.09.1997 NL 1006934
(71) Applicant: Idento Electronics B.V., 8316 PV Marknesse (NL)
(72) Inventor: Cöp, Jacobus Petrus Hendrikus, 8521 KS St. Nicolaasga (NL); De Ruyter, Cornelis, 8016 EP Zwolle (NL)
(74) Representative: 't Jong, Bastiaan Jacobus

(57) **Abstract**

The present invention relates to an installation for milking livestock, comprising:
- a conduit system with teat cups (8) which can be arranged on teats of udders; and
- a robot arm having therein at least one drivable joint and engaging means on the free outer end with which at least one teat cup can be positioned relative to one of the teats and arranged thereon by substantially upward displacement. The robot arm comprises at least one additional joint with which the teat cup (8), at least during arranging thereof, can be aligned with the relevant teat.

## Description

The present invention relates to an installation for milking livestock, comprising: a conduit system with teat cups which can be arranged one teats of udders; and a robot arm having therein at least one drivable joint and engaging means on the free outer end with which at least one teat cup can be positioned relative to one of the teats and arranged thereon by substantially upward displacement.

Such an installation is generally known, for instance from the Netherlands patent application 9500006, wherein teat cups are arranged separately and successively on the respective teats using a milking robot. The milking robot is adapted to provide individual teats with a teat cup on the basis of comparison with positions stored in a memory as these applied during a previous milking operation.

A drawback of the known device is that when one of the teats in question hangs at an angle, i.e. is directed obliquely downward, this to a greater degree than can be compensated by the outward divergent nature of the teat cups at the top, the teat in question will be bent double or trapped in the teat cup, wherein milk delivery from the quarter of the udder corresponding therewith is prevented. This situation is undesirable in the sense that the robot arm must in this case be provided with additional programming for removal of the teat cup from the relevant teat in order to then make another attempt to provide the relevant teat with a teat cup, which may continue to go wrong interminably because the robot arm is substantially adapted, and solely suitable, for a practically vertical movement with a practically vertical alignment of the teat cup. This entails unnecessary loss of time and a less than optimal capacity of the milking installation. It is moreover not possible with the known installation to rearrange a detached teat cup without also releasing the other teat cups.

The invention has for its object to obviate at least the above stated drawback, to which end it is distinguished in that the robot arm comprises at least one additional joint with which the teat cup, at least during arranging thereof, can be aligned with the relevant teat.

The term "alignment" here therefore relates to a longitudinal orientation of the teat in question. As a consequence hereof account is taken of a possible inclining position of the relevant teat by aligning the position of the teat cup relative thereto, wherein the movement of the robot arm to the relevant teat for arrangement of the teat cup thereon can also take place along this line, so that the danger of a teat being trapped and the milking of the associated quarter being prevented is avoided in effective manner.

In a first embodiment an installation according to the present invention is distinguished by detection means connected via a control to the robot arm for detecting the angle of the teat, wherein the control is adapted for corresponding driving of the robot arm.

In the prior art only the position of the relevant teat is detected, wherein according to the invention detecting of the angle is decisive for the direction of the movement through which the teat cup progresses while engaged by the robot arm. The detection means can herein be formed by infrared detectors, video detectors and laser detectors, although many other types of detector can also be used.

In a second embodiment an installation according to the present invention has the property that the detection means are adapted not only for position and angle detection but also for detection of the teat contour in order to determine the condition, in particular the integrity thereof. With this detection damage, diseases and all types of disorder can be determined during the milking, so that such disorders cannot spread further and are monitored, whereafter suitable treatment can provide relief. A diagnostic aid is thus provided.

In a third embodiment an installation according to the present invention has the property that the robot arm is arranged on a displaceable frame separately of the conduit system. Particularly in conjunction with an optional measure that the detection means are arranged on the robot arm, this embodiment has the advantage that the robot arm is not inactive during the actual milking of a cow or other dairy animal, but can be moved to a following position, there to arrange the teat cups on the teats of another cow. This also avoids expensive detection means having to be arranged on each of the robot arms arranged in stationary manner in a milking parlour. An installation according to the present invention is preferably such in this embodiment that the robot arm is an industrial robot.

The present invention otherwise relates to a milking parlour in which is placed at least one installation having at random any of the above described properties.

The present invention also relates to a method for milking livestock, comprising of:
- detecting at least one of the teats of an udder of the animal;
- arranging a teat cup on the relevant teat at the detected location;
- milking the diary animal using the teat cup; and
- removing the teat cups from the teats,
   wherein detection of the teat particularly comprises of determining the angle thereof, and wherein arranging of the teat cup comprises of displacing the teat cup in accordance with the angle of the teat and the teat cup adjusted thereto.

The invention will be further elucidated hereinbelow with reference to an embodiment of an installation according to the present invention. This installation forms part of a milking parlour, wherein the associated method of milking animals will become apparent in the course of the description of the installation. In the drawing:
fig. 1 shows a perspective view of a milking parlour with an installation according to the present invention;
fig. 2 shows a perspective view of a detail of the milking parlour shown in fig. 1;
fig. 3 shows an alternative to the configuration shown in fig. 2;
fig. 4 is a perspective view of a part of an installation according to the present invention in operation; and
fig. 5-7 show schematic top views of milking parlour lay-outs showing the cow traffic, wherein an installation according to the present invention can be applied extremely effectively.

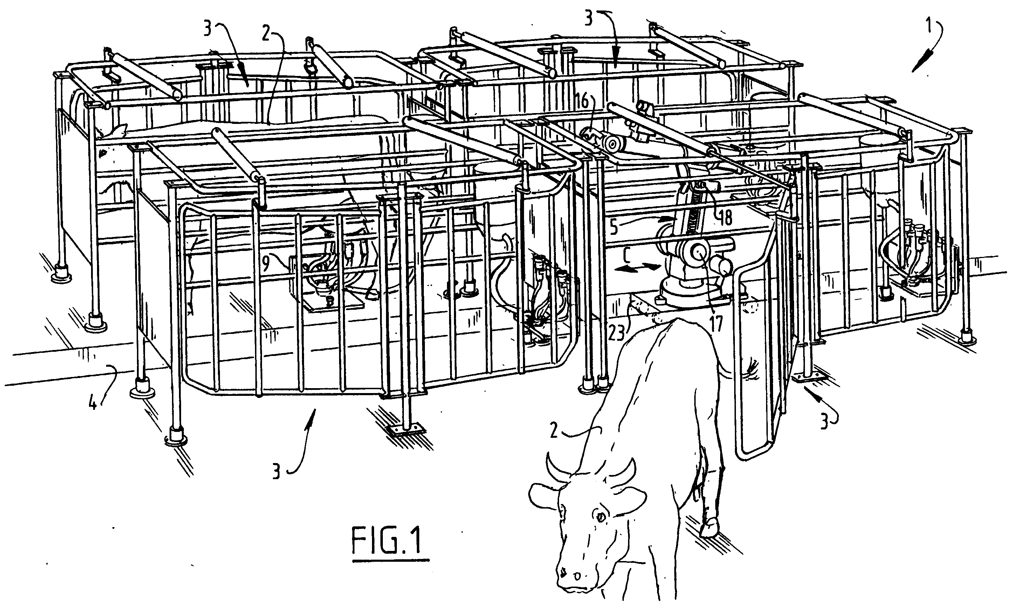

The milking parlour 1 shown in fig. 1 serves for milking of livestock such as cows 2. For this purpose the cows are placed in individual pens 3 formed by fences for the purpose of being milked therein. Pens 3 are placed in head-to-tail arrangement on either side of a central track 4, wherein a milking robot 5 is arranged therebetween on central track 4. In the embodiment shown here, milking robot 5 is designed as industrial robot and is as such displaceable over central track 4. In an alternative embodiment (not shown) the central track is formed by an elongate pit in which the milking robot is displaceable. This has the advantage that the milking robot is placed in an existing milking pit in a parlour without large modifications of the parlour having to be carried out for this purpose. The embodiment shown here is particularly useful when a new parlour is built with a milking installation according to the present invention.

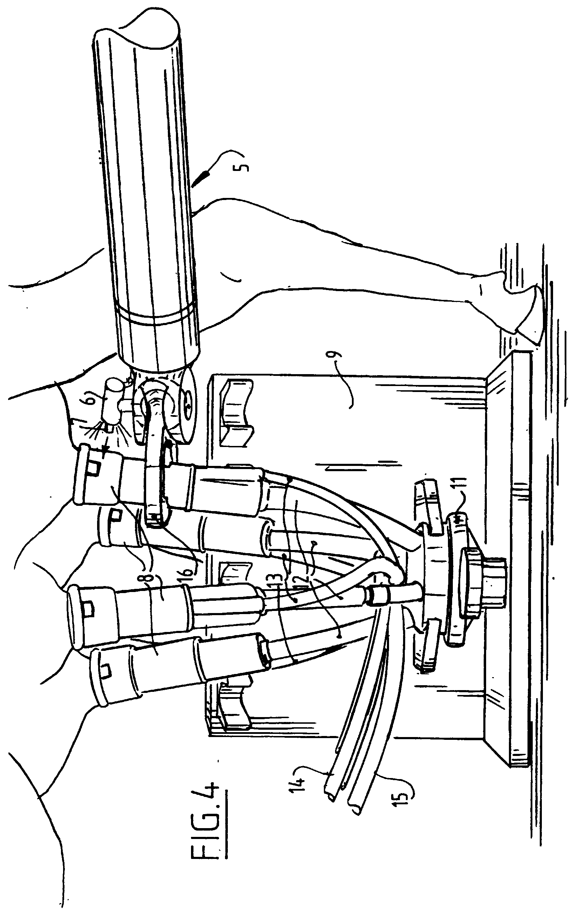

As shown in fig. 4, the industrial robot 5, which functions in the embodiment shown here as milking robot 5, is provided on the wrist joint thereof located close to the outer end of an arm with a camera 6 and a light source 7 co-acting therewith, which form a unit and which serve in combination to detect substantially the angle of one of the teats of an udder of a dairy animal such as a cow, in order to arrange a single teat cup 8 thereon. An optimum range of view of operations of gripper 16 is hereby provided and all errors in the positioning of the arm behind the camera are automatically eliminated at the same time.

When teat cups 8 are not in use, they are placed on a holder 9 so that the teat cups can be retrieved in simple manner by milking robot 5 when a cow has arrived in pen 3 and has to be milked.

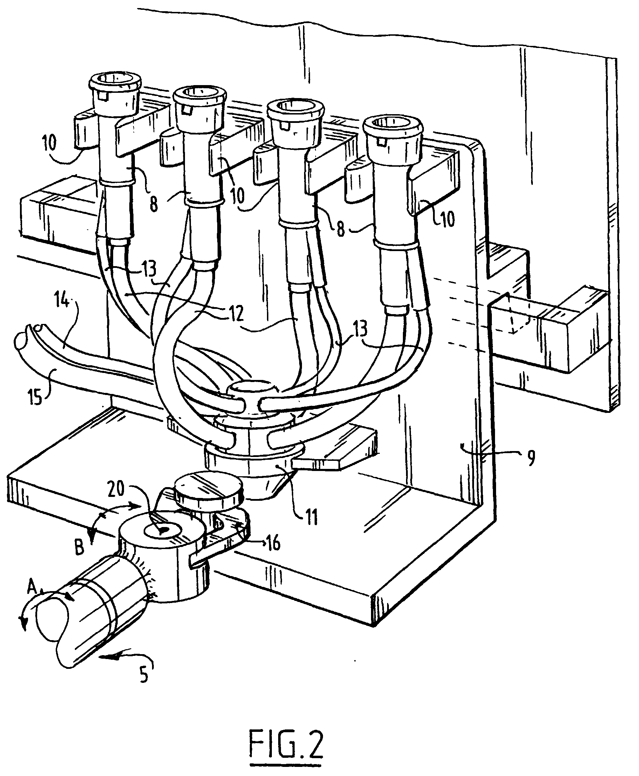

Holder 9 is further shown in fig. 2, wherein the separate cups 8 are placed in associated clamps 10.

Each of the teat cups 8 is otherwise connected to a collective milk collector 11 via conduits 12 which serve for draining of milk, and lines 13 are arranged which serve to control the teat cup 8 in order to engage round the teat under the influence of suction force or vacuum to thus milk the animal. Milk collector 11 is connected by mans of conduit 15 to a milk store and lines 13 are connected to line 14 to control the suction force or vacuum through each of the teat cups on the teats.

With an industrial robot 5 as shown in fig. 1 it is possible, in addition to the above described displacement of the milking robot, to arrange teat cups 8 at any random angle on a teat. This relevant angle of the teat is determined using camera 6, and as option and addition thereto, the light source 7. A control of industrial robot 5 is herein adapted to cause a relevant teat cup 8 to be carried in response to this detection into a position corresponding therewith by robot arm 5. Any possible risk of a teat being bent double or otherwise trapped as a result of an incorrect alignment of the teat cup relative to the teat in question is precluded as such.

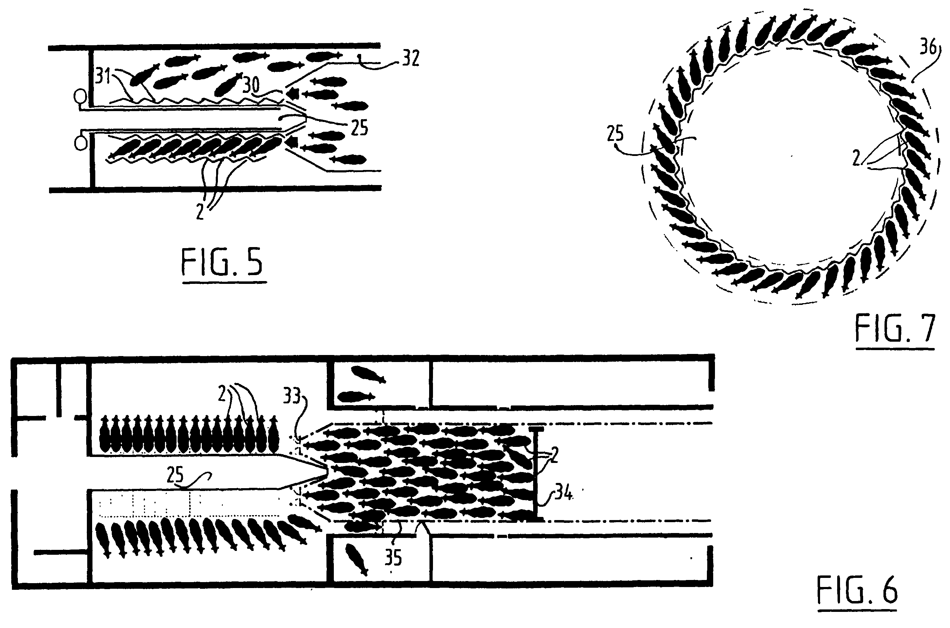

In the arrangement of milking parlours shown here it is not strictly necessary for the industrial robot to be displaceable; it can also be deployed at a central position and swivel round along the milking parlours to arranged teat cups there. Other deployments will be discussed hereinbelow in fig. 5-7, wherein the usefulness of being able to displace the robot arm, usually in the form of an industrial robot, will become more apparent.

Fig. 2 shows most clearly that for engaging one of the teat cups 8 the robot arm 5 is provided close to gripper 16 with two rotation joints 19 and 20, which enable rotation movement in the directions of arrows A and B respectively as addition to the freedom of movement provided by bending joints 17 and 18 with which only a bending movement is possible and which are shown only in fig. 1 and not in fig. 2.

With the above described industrial robot 5 it is possible to align a teat cup 8 within the range of possible angles of teats on an udder with these teats in response to detection of the angle of these teats, wherein the teat cup remains aligned relative to the teat during its arrangement thereon. Thus is prevented in effective manner that a teat can become jammed, trapped or bent double, whereby milking would be obstructed.

It is moreover possible with the new configuration proposed here to follow teats with the robot arm during arranging of teat cups when the animal for milking moves. The reliability of the installation is therefore also improved hereby relative to known installations.

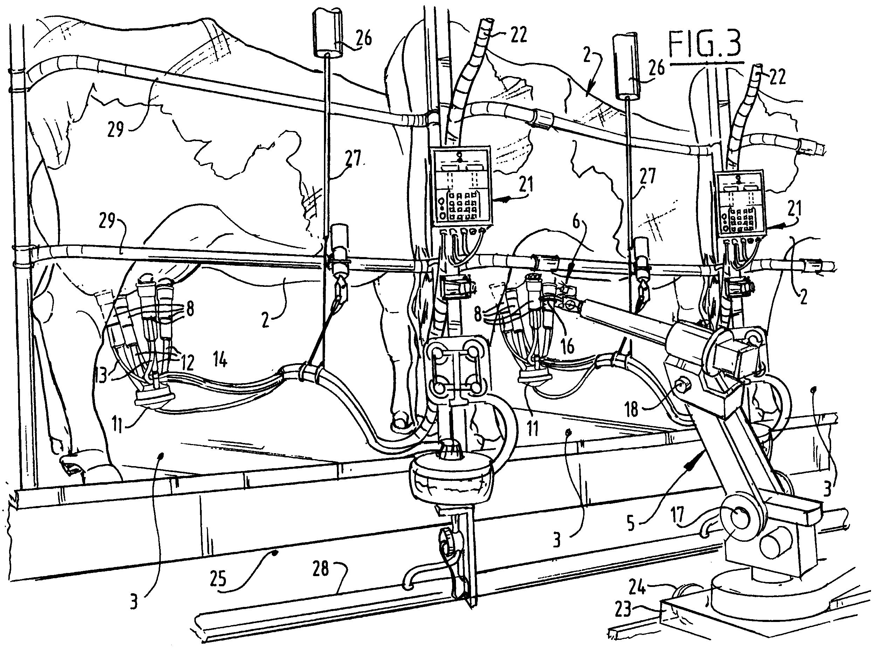

Fig. 3 shows a configuration as an alternative to that shown in fig. 2, wherein it is the object to return the teat cups to a predetermined location after milking of the cow has ended.

The configuration of the milking parlour shown in this fig. 3 differs from that shown in fig. 1, wherein for milking purposes the cows 2 are arranged side by side at an angle to pit 25 from which milking robot 5 operates.

After completion of the milking, processor 21 detects that no further milk is being obtained from the relevant cow, whereafter the milking action of teat cups 8 is ended and cups 8 can drop away from the teats of the relevant cow 2 under the control of processor 21 which, by means of connection 22, is in contact with a central computing and storage unit, which is not further shown or described here since it does not form part of the present invention.

When teat cups 8 have dropped off the teats of the relevant cow 2 because no further suction action is exerted on the teats of the cow 2 in question, a pull-back mechanism 26 comes into operation which acts on a rope 27 which is connected on one side to pull-back mechanism 26 and on the other side to the lines 14, 15 running from milk collector 11 to a manifold 28. Through retraction of rope 27 by pull-back mechanism 26 the lines 14, 15, milk collector 11 and the teat cups 8 connected thereto are retracted to a position close to fence 29, wherein this position is at least approximately known in advance to the control of robot 5 for each of the milking parlours or pens 3, so that milking robot 5 can retrieve the teat cups at least roughly at the fence 29 when the teat cups have to be arranged on the teats of a cow 2 to be subsequently milked.

The advantage of this procedure is that milking robot 5 only has the task of arranging teat cups 8 on the teats of a relevant cow 2 and, as is the case in the configuration of fig. 2, does not also have to be employed to return teat cups 8 to a determined position (in fig. 2 the clamps 10) after milking of the relevant cow 2 has ended.

Milking robot 5 with the components already described in conjunction with fig. 1 and fig. 2 further comprises a camera 6 which is arranged on the outermost wrist joint at the end of robot arm 5, as further described below with reference to fig. 4. Fig. 3 further shows that robot arm 5 is placed on a mobile foot 23 which can travel along pens 3 on wheels 24 in order to fulfil its task at each of the pens 3. The mobile foot 23 is placed on wheels 24 and can thus travel, wherein these wheels are driven by means of a motor (not shown) to either travel over the floor of a pit 25 in the milking parlour or to follow a rail (likewise not shown) arranged on the floor of this pit 25. The central control which, as stated above, is not shown here is adapted to control displacement of robot arm 5 on the mobile foot 23 in response to and in conjunction with signals coming from processors 21 which indicate that milking of a relevant cow 2 has ended. After a suitable time delay the robot arm 5 is then actuated for movement to the pen 3, where milking of one of the cows 2 has already ended, in order to provide another cow for milking with teat cups 8.

Mention has been made in the foregoing to a rope 27, wherein it is noted that use can also be made of a spring or other type of member or mechanism, wherein carrying to the fence 29 of the milk collector, lines 14, 15 and teat cups 8 is realized, thus enabling milking robot 5 in any case to retrieve the teat cups 8 here for arrangement of these latter on the teats of another cow for milking.

The camera 6 shown in fig. 4 is a camera per se known in the art. The detection of a teat on the udder of a cow or other similar diary animal results, in addition to detection of the angle of the teat for alignment of the teat cups, also in a diagnostic inspection and analysis of the condition of the udder, wherein a check is for instance made as to whether abscesses have occurred thereon or the cow has injured itself, which may indicate undesirable disorders, etc. This detection or diagnosis and analysis therefore take place on the basis of the contour of the teat.

Image-forming technique can also be applied to record an image in grey tones or even in colour wherein, from variations therein in time or for instance relative to a preset value, diagnostic data can be derived relating to the condition of the udder in question and in particular the teats thereof. Use is preferably made herein of a CCD camera which converts the image into digital signals in order to make them suitable for further real-time processing.

Fig. 5 shows a parlour lay-out resembling that shown partly in fig. 3. Cows 2 for milking are herein guided via an entrance 30 to milking positions 31, which is usually a known route for the cows 2, so that this can be accomplished practically without any pressure. After milking is completed the cows can only leave the parlour along passageway 32, since entrance 30 is blocked as exit by cows 2 waiting for their turn to be milked.

The cows 2 for milking are placed side by side along a pit 25 in which a milking robot according to the present invention is deployed for displacement, as described above with reference to fig. 1 or fig. 3. The milking robot 5, which can travel though pit 25 and is not further shown here, moves along the cows placed side by side and at an angle relative to pit 25 in order to arrange the teat cups on the teats of these cows. Milking robot 5 therefore carries out the task of the farmer who would move on foot through pit 25 to arrange the teat cups. Thus is avoided that a separate robot arm has to be deployed for each position at which a cow can be milked. The arrangement of the cows shown in this fig. 5 is known as the herringbone configuration, wherein for the configuration shown in fig. 6, which is known as the parallel through-flow configuration, substantially the same advantages apply in relation to the use of a displaceable milking robot 5 which moves through a pit 25, wherein cows 2 are grouped on either side of the pit in a direction at right angles to the longitudinal direction thereof. In this configuration milking robot 5 must reach through between the hind legs of a cow in order to arrange teat cups 8 on the teats of the relevant cows. This in contrast to the herringbone configuration, wherein milking robot 5 extends along the front of one of the hind legs of the cows 2 for milking to arrange the teat cups on the teats.

The arrangement shown in fig. 6 is otherwise provided with two measures, i.e. a controllable gate 33 and a driving fence 34 respectively to allow cows through to the milking positions on either side of pit 25 when milking of a number of cows has been completed. The cows whose milking is completed can here also only leave the vicinity of pit 25 past gate 33 and a separate fence 35, so that no confusion can occur about which of the cows have been milked and which not. Inasfar as this is necessary, the cows for milking are urged into movement by driving fence 34 in the direction of the controllable gate 33 when this is opened.

Finally, fig. 7 shows another configuration wherein a round pit 25 is provided around which can be rotated a turntable platform 36 on which milking positions are arranged. Cows 2 are moved to the milking positions on this turntable platform in order to be milked, wherein along the periphery of pit 25 is disposed a milking robot according to the present invention which arranges teat cups 8 on teats of the relevant cows 2. The turntable rotates round pit 25 so that the cows which are being milked progress through one full rotation from the moment that they step onto turntable platform 36 and before they are once again able to leave this turntable platform, wherein milking of these cows takes place in a time period corresponding with this rotation. Depending on the rotation speed of the turntable platform in relation to the time period required to milk one cow, use can be made of one or more than one feeder route to the turntable platform and one or more than one departure route therefrom for feed and removal of cows for milking. In accordance therewith, as many stationary milking robots according to the present invention as feeder routes are necessary when these milking robots are stationary, although when these milking robots according to the present invention are displaceable, it is possible to suffice once again with a single milking robot as described for instance with reference to fig. 3 which is displaceable over a rail or over the floor of the pit.

Many embodiments other than those dealt with above are possible within the scope of the present invention as this is defined on the basis of the appended claims.

It is thus possible that use is not made per se of an industrial robot but of a stationary robot arm which is adapted solely to function at one milking location at a time, or wherein fewer joints are arranged. What is important is that each of the teat cups is arranged separately on the teats of an udder but above all that the movement of the teat cup is in line with the angle or direction of the teat or teats in question. The determining of angle based on detection, which goes further than simply establishing position, is decisive for the degree of success in arranging teat cups on teats. Separate arrangement of the teat cups does not however entail that this must also take place in sequence; when more than one robot arm or a robot arm with diverse branches is applied, all teat cups can be arranged individually yet simultaneously. It is however noted here that an industrial displaceable robot has the further advantage that with a single device according to the present invention a large number of cows can be milked in sequence and at random by making use of only one device designed as displaceable industrial robot.

## Claims

1. Installation for milking livestock, comprising:
- a conduit system with teat cups which can be arranged on teats of udders; and
- a robot arm having therein at least one drivable joint and engaging means on the free outer end with which at least one teat cup can be positioned relative to one of the teats and arranged thereon by substantially upward displacement,
wherein the robot arm comprises at least one additional joint with which the teat cup, at least during arranging thereof, can be aligned with the relevant teat.

2. Installation as claimed in claim 1, **characterized by** detection means connected via a control to the robot arm for detecting the angle of the relevant teat, wherein the control is adapted for corresponding driving of the robot arm.

3. Installation as claimed in claim 2, **characterized in that** the detection means comprise one or more than one of infrared detection, video detection and laser detection.

4. Installation as claimed in claim 2, **characterized in that** the detection means are adapted not only for position and angle detection but also for detection of the teat contour in order to determine the condition, in particular the integrity thereof.

5. Installation as claimed in claim 1, **characterized in that** the detection means are arranged on the robot arm.

6. Installation as claimed in claim 1, **characterized in that** the robot arm is arranged on a displaceable frame separately of the conduit system.

7. Installation as claimed in claim 6, **characterized in that** the robot arm is an industrial robot.

8. Milking parlour comprising at least one installation as claimed in any of the foregoing claims.

9. Installation for milking livestock, comprising:
- a conduit system with teat cups which can be arranged on teats of udders; and
- a robot arm having therein at least one drivable joint and engaging means on the free outer end with which at least one teat cup can be positioned relative to one of the teats and arranged thereon by substantially upward displacement, **characterized in that** the robot arm is arranged on a displaceable frame separately of the conduit system.

10. Installation as claimed in claim 9, **characterized in that** the robot arm is an industrial robot.

11. Method for milking livestock, comprising of:
- detecting at least one of the teats of an udder of the animal;
- arranging a teat cup on the relevant teat at the detected location;
- milking the diary animal using the teat cup; and
- removing the teat cups from the teats,
wherein detection of the teat particularly comprises determining the angle thereof, and wherein arranging of the teat cup comprises of displacing the teat cup in accordance with the angle of the teat and with the teat cup adjusted thereto.
